(19) Europäisches Patentamt
European Patent Office
Office européen des brevets

(11) **EP 3 940 601 A1**

(12) **EUROPEAN PATENT APPLICATION**

(43) Date of publication:
**19.01.2022 Bulletin 2022/03**

(51) International Patent Classification (IPC):
***G06N 3/04*** *(2006.01)*          ***G06N 3/08*** *(2006.01)*

(21) Application number: **21167810.7**

(52) Cooperative Patent Classification (CPC):
**G06N 3/0454; G06N 3/084**

(22) Date of filing: **12.04.2021**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **14.07.2020 JP 2020120647**

(71) Applicant: **FUJITSU LIMITED
Kanagawa 211-8588 (JP)**

(72) Inventor: **Kasagi, Akihiko
Kanagawa, 211-8588 (JP)**

(74) Representative: **Hoffmann Eitle
Patent- und Rechtsanwälte PartmbB
Arabellastraße 30
81925 München (DE)**

(54) **INFORMATION PROCESSING APPARATUS, INFORMATION PROCESSING METHOD, AND INFORMATION PROGRAM**

(57) An information processing method executed by a computer, the method includes inputting training data to a machine learning model that includes a convolution layer and acquire an output result by the machine learning model; extracting a specific element that meets a specific condition from among elements included in error information based on an error between the training data and the output result; and performing machine learning of the convolution layer using the specific element.

FIG. 1

FORWARD PROPAGATION (RECOGNITION PROCESSING): CATEGORIZE IMAGE

INPUT LAYER (Input) | CONVOLUTION LAYER (Conv 1) | ACTIVATION FUNCTION LAYER (ReLU1) | POOLING LAYER (Pool 1) | CONVOLUTION LAYER (Conv 2) | ACTIVATION FUNCTION LAYER (ReLU2) | POOLING LAYER (Pool 2) | FULLY-CONNECTED LAYER (Fully-connl) | SOFTMAX LAYER (Softmax) | OUTPUT LAYER (Output)

BACKPROPAGATION (LEARNING PROCESSING): UPDATE PARAMETER OF NEURAL NETWORK

EP 3 940 601 A1

**Description**

FIELD

The embodiments discussed herein are related to an information processing apparatus, an information processing method, and an information processing program.

BACKGROUND

In recent years, in various fields such as image recognition or character recognition, deep Learning (DL) using a neural network that includes respective layers including an input layer, a hidden layer (intermediate layer), and an output layer is used. For example, a convolution neural network (CNN) includes a convolution layer and a pooling layer as hidden layers.

In the deep learning, the convolution layer has a role for outputting characteristic information by executing filtering processing on input data. Specifically, for example, a shape that matches a filter is detected as a large numerical value, and is propagated to a next layer.

Then, in the convolution layer, information regarding the filter is updated so as to extract more characteristic information as learning progresses. For the shape of the filter, a correction amount of the filter at the time of learning referred to as an "error gradient" is used. For example, as related art, Japanese Laid-open Patent Publication No. 2019-212206, Japanese Laid-open Patent Publication No. 2019-113914, and the like are disclosed.

SUMMARY

[TECHNICAL PROBLEM]

However, because a processing load when a filter in a convolution layer is learned is high, a learning time of deep learning is lengthened. For example, in order to learn the filter of the convolution layer, an error gradient indicating a correction amount of filter information is needed, and processing for calculating the error gradient needs a calculation amount equivalent to filtering processing. Therefore, the calculation amount is large, and a processing load of the filter learning processing is high, and this increases a processing time of the entire deep learning.

[SOLUTION TO PROBLEM]

According to an aspect of the embodiments, An information processing method executed by a computer, the method includes inputting training data to a machine learning model that includes a convolution layer and acquire an output result by the machine learning model; extracting a specific element that meets a specific condition from among elements included in error information based on an error between the training data and the output result; and performing machine learning of the convolution layer using the specific element.

BRIEF DESCRIPTION OF DRAWINGS

FIG. 1 is a diagram for explaining a machine learning model generated by an information processing apparatus according to a first embodiment through machine learning;
FIG. 2 is a diagram for explaining processing of a convolution layer at the time of forward propagation;
FIG. 3 is a diagram for explaining calculation at the time of the forward propagation of the convolution layer;
FIG. 4 is a diagram for explaining machine learning processing of the convolution layer at the time of backpropagation;
FIG. 5 is a diagram for explaining calculation of an error gradient in the convolution layer at the time of the backpropagation;
FIG. 6 is a diagram for explaining a problem in calculating the error gradient;
FIG. 7 is a functional block diagram illustrating a functional configuration of the information processing apparatus according to the first embodiment;
FIG. 8 is a diagram for explaining calculation of an error gradient in a convolution layer according to the first embodiment;
FIG. 9 is a diagram for explaining comparison of error extractions;
FIG. 10 is a diagram for explaining a specific example of the error extraction;
FIG. 11 is a diagram for explaining a specific example of the error extraction;

FIG. 12 is a flowchart illustrating a flow of machine learning processing;

FIG. 13 is a diagram for explaining a specific example of an application to LeNet;

FIG. 14 is a diagram for explaining accuracy at the time of learning in a case of an application to the LeNet;

FIG. 15 is a diagram for explaining reduction in a calculation amount in a case of an application to the LeNet;

FIG. 16 is a diagram for explaining reduction in a calculation amount in a case of an application to ResNet; and

FIG. 17 is a diagram for explaining a hardware configuration example.

[ADVANTAGEOUS EFFECTS OF INVENTION]

In one aspect, it is possible to shorten a processing time of learning processing.

DESCRIPTION OF EMBODIMENTS

Hereinafter, embodiments of an information processing apparatus, an information processing method, and an information processing program disclosed in the present application will be described in detail with reference to the drawings. Note that the present embodiments are not limited to the examples. Furthermore, each of the embodiments may be appropriately combined within a range without inconsistency.

[First Embodiment]

[Description of Information Processing Apparatus]

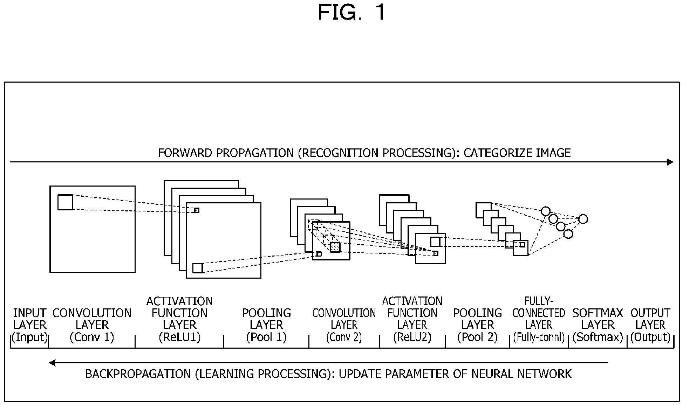

FIG. 1 is a diagram for explaining a machine learning model generated by an information processing apparatus 10 according to a first embodiment through machine learning. The information processing apparatus 10 according to the first embodiment is an example of a computer device that generates a machine learning model through deep learning using training data that is image data.

In the deep learning, a feature of an identification target is automatically learned in a neural network by performing supervised learning regarding the identification target. After learning has been completed, the identification target is identified using the neural network that has learned the feature. For example, in the deep learning, by performing the supervised learning using a large number of images of the identification target as image data for training (learning), a feature of the identification target in the image is automatically learned in the neural network. Thereafter, the identification target in the image can be identified using the neural network that has learned the feature in this way.

(Description of CNN)

In the first embodiment, as an example of the neural network, an example using a CNN will be described. As illustrated in FIG. 1, the CNN is a multilayered neural network having a multilayered structure and includes a plurality of layers including a convolution layer for each channel. For example, the CNN includes an input layer (Input), a convolution layer (Conv1), an activation function layer (ReLu1), a pooling layer (Pool1), a convolution layer (Conv2), an activation function layer (ReLu2), a pooling layer (Pool2), a fully-connected layer (Fully-connl), a softmax layer (Softmax), and an output layer (Output).

In a case of identifying image data, as illustrated in FIG. 1, the CNN extracts the feature of the identification target in the image data by processing each intermediate layer from the left (input layer) to the right (output layer) and finally identifies (categorize) the identification target in the image data in the output layer. This processing is referred to as forward propagation, recognition processing, or the like. On the other hand, in a case where the image data is learned, the CNN calculates error information that is an error between the identified result and correct answer information, and as illustrated in FIG. 1, backpropagates the error information from the right (output layer) to the left (input layer), and changes a parameter (weight) of each intermediate layer. This processing is referred to as backpropagation (error backpropagation), learning processing, or the like. Note that data propagated in the CNN is also referred to as feature amount information or neuron data.

Next, an operation of each intermediate layer will be described. In each convolution layer, the feature amount information (feature map) indicating where the feature exists in the image data is generated from the input data by performing filtering using a filter. For example, in the convolution layer, convolution with a filter having $m \times m$ size in which a parameter is set to each value of each pixel of input $N \times N$ pixel image data is calculated so as to generate the feature amount information, and the generated information is output to a next layer. Note that the feature amount information for each channel is generated and forward propagated by using the filters different for each channel.

In each activation function layer, the feature extracted in the convolution layer is emphasized. In other words, for example, in the activation function layer, an activation (activation) is modeled by making feature amount information for output pass through an activation function. For example, each activation function layer changes a value of an element of which a value is equal to or less than zero among elements of the input feature amount information to zero and outputs the element to a next layer.

In the pooling layer, statistical processing is executed on the feature amount information extracted in the convolution layer. For example, when M × M pixel feature amount information (neuron data) is input, in the pooling layer, feature amount information of (M/k) × (M/k) is generated from the M × M pixel feature amount information. For example, for each region of k × k, feature amount information in which the feature is emphasized is generated using Max-Pooling for extracting the maximum value, Average-Pooling for extracting an average value in the k × k region, or the like.

In the fully-connected layer, the extracted feature amount information is combined, and a variable indicating the feature is generated. Specifically, for example, in the fully-connected layer, pieces of image data from which a feature portion is extracted are combined into a single node, and a value (feature variable) converted with an activation function is output. Note that as the number of nodes increases, the number of divisions of a feature amount space increases, and the number of feature variables that characterize respective regions increases. That is, for example, in the fully-connected layer, a fully connected operation in which all the pieces of input feature amount information are combined is performed according to the number of targets to be identified.

The softmax layer converts the variable generated in the fully-connected layer into a probability. Specifically, for example, the softmax layer converts an output (feature variable) from the fully-connected layer into a probability using a softmax function. In other words, for example, the softmax layer performs an operation for making the feature amount information for output pass through the activation function to be normalized so that the activation is modeled.

The output layer identifies the image data (training data) input to the input layer using the operation result input from the softmax layer. Specifically, for example, the output layer performs classification by maximizing a probability of being correctly classified into each region (maximum likelihood estimation method) on the basis of an output from the softmax layer. For example, in a case where it is identified which one of ten types the identification target in the image data is, ten pieces of neuron data are output from the fully-connected layer to the output layer via the softmax layer as an operation result. The output layer uses a type of an image corresponding to neuron data of which a probability distribution is the largest as an identification result. Furthermore, in a case where learning is performed, the output layer obtains an error by comparing a recognition result and a correct answer. For example, the output layer obtains an error from a target probability distribution (correct answer) using a cross entropy error function.

In this way, in the deep learning, it is possible to make the CNN automatically learn the feature by performing the supervised learning. For example, in the error backpropagation that is generally used for supervised learning, learning data is forward propagated to the CNN for recognition, and an error is obtained by comparing the recognition result and a correct answer. Then, in the error backpropagation, the error between the recognition result and the correct answer is propagated to the CNN in a direction reverse to that at the time of recognition, and a parameter of each layer of the CNN is changed and is made to approach an optimum solution.

(Convolution Layer)

Here, in the deep learning, the convolution layer has a role for outputting the feature amount information that is characteristic information by executing filtering processing on the input data, and information regarding a filter is updated so as to further extract the feature amount information as the learning progresses. Here, recognition processing at the time of forward propagation and learning processing at the time of backpropagation executed by the convolution layer will be described.

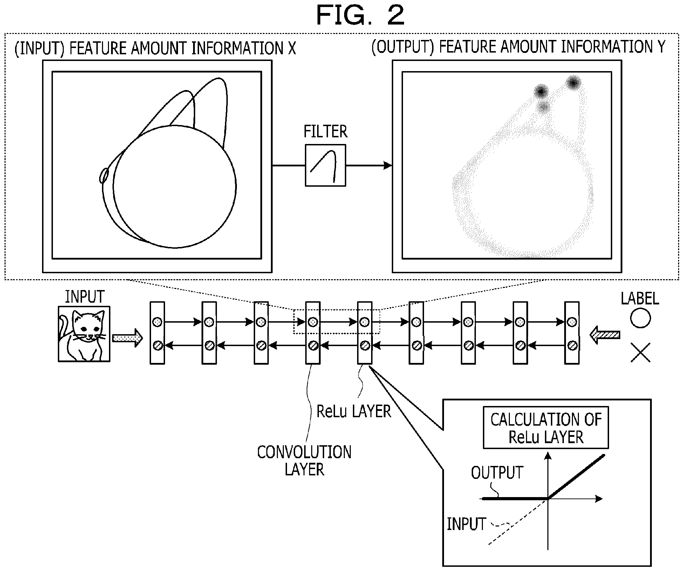

FIG. 2 is a diagram for explaining processing of the convolution layer at the time of forward propagation. As illustrated in FIG. 2, at the time of forward propagation, the convolution layer of each channel shares a weight tensor referred to as a filter (also referred to as kernel) so as to generate a feature map of a next layer from the target feature map. In the example in FIG. 2, by performing filtering using a filter on input feature amount information X, feature amount information Y is generated in which an element among respective elements in the feature amount information X that matches the filter is emphasized. Note that, in the ReLu layer subsequent to the convolution layer, all the values of the respective elements of the feature amount information Y equal to or less than zero are changed to zero and are output to the next layer.

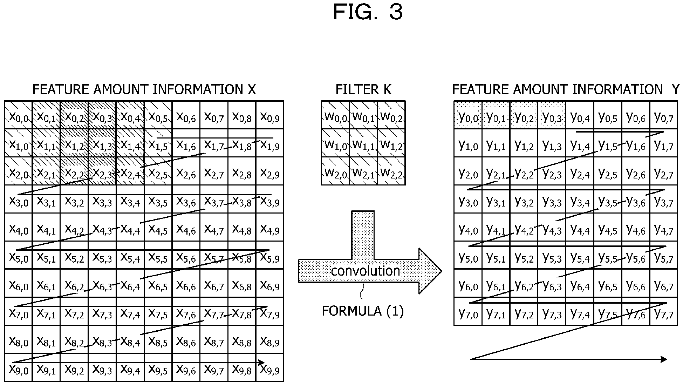

FIG. 3 is a diagram for explaining calculation of the convolution layer at the time of forward propagation. Note that, in FIG. 3, processing for one input channel and one output channel is illustrated. However, in actual, similar processing is executed on all the input channels. As illustrated in FIG. 3, at the time of forward propagation, the convolution layer generates the feature amount information Y by multiplying a filter K of 3 × 3 size by the feature amount information X of 10 × 10 size.

Specifically, for example, an element of the feature amount information Y is calculated by calculating an inner product of each element of the filter K and each element of the feature amount information Y corresponding to each element of the filter K and totaling the calculated inner products using the formula (1) while sliding the filter K across the entire feature amount information X. For example, calculation is performed as "$y_{0,0} = (x_{0,0} \times w_{0,0}) + (x_{0,1} \times w_{0,1}) + (x_{0,2} \times w_{0,2}) + (x_{1,0} \times w_{1,0}) + (x_{1,1} \times w_{1,1}) + (x_{1,2} \times w_{1,2}) + (x_{2,0} \times w_{2,0}) + (x_{2,1} \times w_{2,1}) + (x_{2,2} \times w_{2,2})$".
[Expression 1]

$$y_{i,j} = \sum_{0 \leq u,v \leq k} x_{i+u,j+v} w_{u,v} \qquad \cdots (1)$$

In this way, because the convolution layer extracts a feature value through filtering, if there is a shape that matches the filter, the shape is detected as a large numerical value and is propagated to the next layer. In the convolution layer in the deep learning, content of the filter changes by learning and is changed to a filter shape so as to extract a more characteristic shape as learning progresses. For this filter shape, a correction amount of the filter at the time of machine learning referred to as "error gradient" is used.

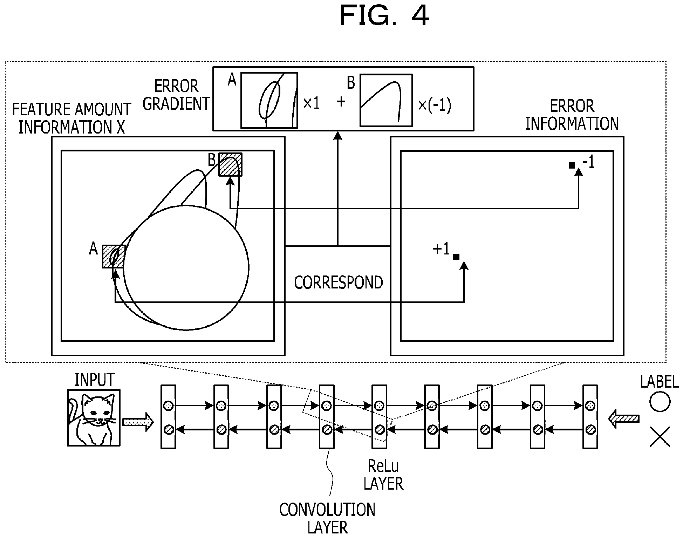

FIG. 4 is a diagram for explaining machine learning processing of the convolution layer at the time of backpropagation. In FIG. 4, an example will be described in which error information corresponding to an element A of feature amount information is "+1" and error information corresponding to an element B of the feature amount information is "-1". In a case of this example, an error gradient is calculated so as to perform filtering that emphasizes a feature amount of the element A and does not emphasize a feature amount of the element B, and the filter is updated. That is, for example, the error gradient of the convolution layer is calculated from two pieces of information including the error information propagated through the error backpropagation and the feature amount information at the time of forward propagation. Then, a part of feature amount information corresponding to each element of the error information is used as an error gradient to a filter.

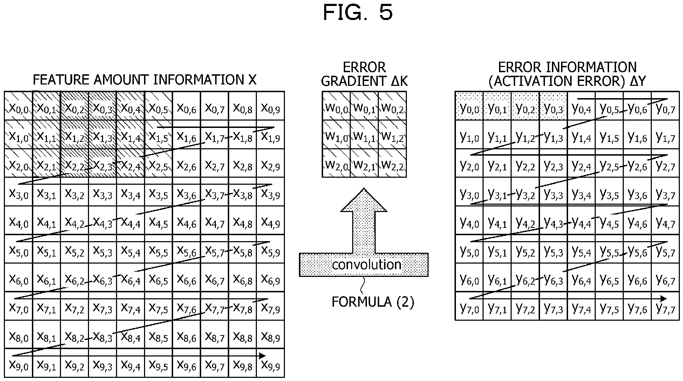

FIG. 5 is a diagram for explaining calculation of an error gradient in the convolution layer at the time of the backpropagation. Note that, in FIG. 5, processing for one input channel and one output channel is illustrated. However, in actual, similar processing is executed on all the input channels. As illustrated in FIG. 5, at the time of backpropagation, in the convolution layer, each element of error information $\Delta Y$ referred to as an activation error is scalar-multiplied by the feature amount information X of $10 \times 10$ size and addition is repeated so as to calculate an error gradient $\Delta K$.

Specifically, while the feature amount information X slides by a size (window) of a filter K, the error gradient $\Delta K$ is calculated from a product of a submatrix of the feature amount information X and the error information using the formula (2). For example, the error gradient $\Delta K$ "$w_{0,0}$" is calculated by "$w_{0,0} = (y_{0,0} \times x_{0,0}) + (y_{1,0} \times x_{1,0}) + (y_{2,0} \times x_{2,0}) +...+ (y_{0,1} \times x_{0,1}) +...$". Similarly, the error gradient $\Delta K$ "$w_{0,1}$" is calculated by "$w_{0,1} = (y_{0,0} \times x_{0,1}) + (y_{1,0} \times x_{1,1}) + (y_{2,0} \times x_{2,1}) +...+ (y_{0,1} \times x_{0,2}) +...$". In this way, according to the error information (element of $\Delta Y$) that needs to be corrected, information regarding the feature amount information X corresponding to the element is reflected to the filter (kernel) as the error gradient. [Expression 2]

$$w_{u,v} = \sum_{0 \leq i,j \leq n} y_{i,j} x_{i+u,j+v} \qquad \cdots (2)$$

(Problem)

As described with reference to FIGs. 2 to 5, in order to perform machine learning of the filter of the convolution layer, the error gradient indicating a correction amount of the filter information is needed. For the processing for calculating the error gradient, a calculation amount equivalent to the filtering processing is needed. As a result, a processing load of learning of the filter of the convolution layer is high, and the learning of the filter takes a longer time.

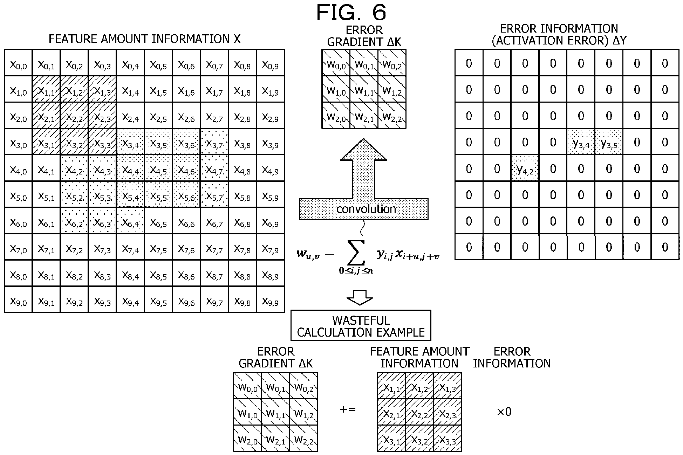

FIG. 6 is a diagram for explaining a problem in calculating the error gradient. As illustrated in FIG. 6, in the current convolution layer, if the error information that is backpropagated is "0", the product of the submatrix of the feature amount information X that is an input and the error information is obtained unnecessarily and is added, and therefore, unnecessary processing is frequently executed. For example, in the example in FIG. 6, except for "$y_{3,4}$", "$y_{3,5}$", and "$y_{4,2}$" of all elements of error information $\Delta Y$ of $8 \times 8$ size, although values of the elements are "0", convolution processing is executed while calculating error gradients for all the elements. Although such multiplication with "0" is processing that has a small effect on the value of the error gradient, the multiplication is frequently performed at the time of machine learning.

Furthermore, the error information often includes "0". This is because a ReLU layer (layer that sets negative value to zero) is inserted immediately after the convolution layer typically, the error information that is propagated to the convolution layer often includes "0". Furthermore, this is because the ReLU layer performs backpropagation while setting the element of the error information (of same coordinates) corresponding to the element that is set to "0" at the time of forward propagation to be "0". Moreover, since an error (correction amount) inevitably approaches "0" as learning progresses, a value that is substantially "0" frequently appears.

Therefore, the information processing apparatus 10 according to the first embodiment extracts a specific element that meets a specific condition of elements included in error information based on an error between the training data and an output result and performs machine learning of the convolution layer of the CNN using the specific element. In other words, for example, the information processing apparatus 10 according to the first embodiment reduces convolution calculation to an error gradient with less necessity by considering a usage and characteristics of error gradient calculation to the filter of the convolution layer, and the error gradient calculation processing on the filter is reduced. As a result, it is possible to shorten a machine learning time of the convolution layer, and therefore, it is possible to shorten a time needed for the machine learning of the CNN.

[Functional Configuration]

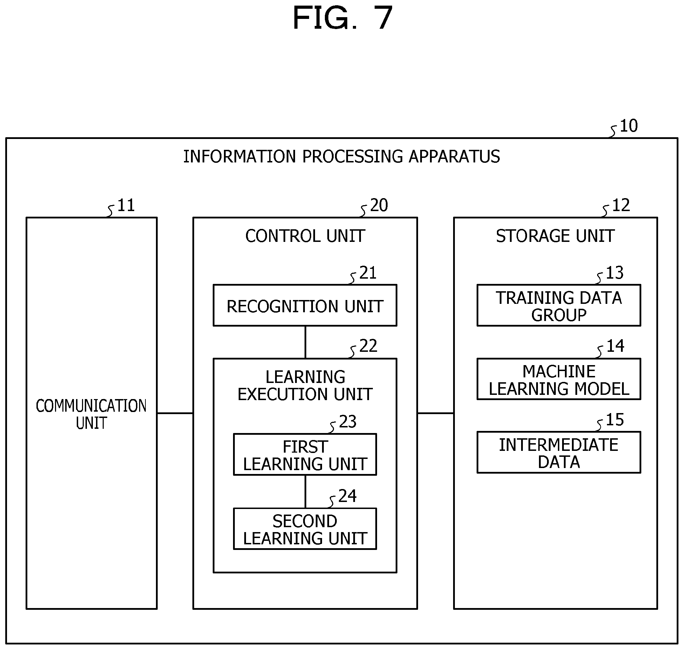

FIG. 7 is a functional block diagram illustrating a functional configuration of the information processing apparatus 10 according to the first embodiment. As illustrated in FIG. 7, the information processing apparatus 10 includes a communication unit 11, a storage unit 12, and a control unit 20.

The communication unit 11 is a processing unit that controls communication with another device, and is achieved by, for example, a communication interface or the like. The communication unit 11 receives training data or an instruction to start learning processing or the like from an administrator terminal. Furthermore, the communication unit 11 transmits a learning result or the like to the administrator terminal.

The storage unit 12 is a processing unit that stores various types of data, programs executed by the control unit 20, and the like, and is achieved by, for example, a memory, a hard disk, or the like. The storage unit 12 stores a training data group 13, a machine learning model 14, and intermediate data 15.

The training data group 13 is a set of training data used for machine learning of the machine learning model 14. For example, each piece of the training data is supervised (labeled) training data in which image data is associated with correct answer information (label) of the image data.

The machine learning model 14 is a model such as a classifier using the CNN generated by the control unit 20 to be described later. Note that the machine learning model 14 may be the CNN that has performed machine learning or various parameters of the CNN that has learned machine learning.

The intermediate data 15 is various types of information output at the time of recognition processing or at the time of learning of the machine learning model 14, and for example, is feature amount information (feature map) acquired at the time of forward propagation, error information (error gradient) used to update a parameter at the time of backpropagation, or the like.

The control unit 20 is a processing unit that controls the entire information processing apparatus 10 and is achieved by, for example, a processor or the like. The control unit 20 includes a recognition unit 21 and a learning execution unit 22, executes machine learning processing of the machine learning model 14 (CNN), and generates the machine learning model 14. Note that the recognition unit 21 and the learning execution unit 22 are achieved by a process or the like executed by an electronic circuit included in a processor or the processor.

The recognition unit 21 is a processing unit that executes the recognition processing at the time of forward propagation of the machine learning processing of the machine learning model 14. Specifically, for example, the recognition unit 21 inputs each piece of the training data of the training data group 13 to the machine learning model 14 (CNN) and recognizes the training data. Then, the recognition unit 21 associates the training data with the recognition result and stores the associated data in the storage unit 12 as the intermediate data 15. Note that because the recognition processing is processing similar to processing executed by a general CNN, detailed description will be omitted.

The learning execution unit 22 includes a first learning unit 23 and a second learning unit 24 and executes backpropagation processing of the machine learning processing of the machine learning model 14. In other words, for example, the learning execution unit 22 updates various parameters included in the CNN. Specifically, for example, the learning execution unit 22 calculates error information indicating an error between the recognition result by the recognition unit 21 and the correct answer information of the training data for each piece of training data and updates a parameter of the CNN using the error information by the error backpropagation. Note that machine learning is performed for each channel. Furthermore, as a method for calculating the error information, a method similar to a method that is typically used in CNN machine learning can be adopted.

The first learning unit 23 is a processing unit that performs machine learning by the error backpropagation for a layer that is each layer included in the machine learning model 14 and is a layer other than the convolution layer of the layers to be learned, for each channel. For example, the first learning unit 23 optimizes a connection weight of the fully-connected layer using the error information that is backpropagated by the error backpropagation. Note that as the optimization method, processing executed by a general CNN can be adopted.

The second learning unit 24 is a processing unit that performs machine learning by the error backpropagation regarding the convolution layer of the machine learning model 14 for each channel. Specifically, for example, the second learning unit 24 calculates an error gradient of the convolution layer using only the element that meets the specific condition among the error information that has been backpropagated and updates a filter of the convolution layer using the error gradient. In other words, for example, the second learning unit 24 executes learning processing different from general learning processing executed in the convolution layer of the CNN.

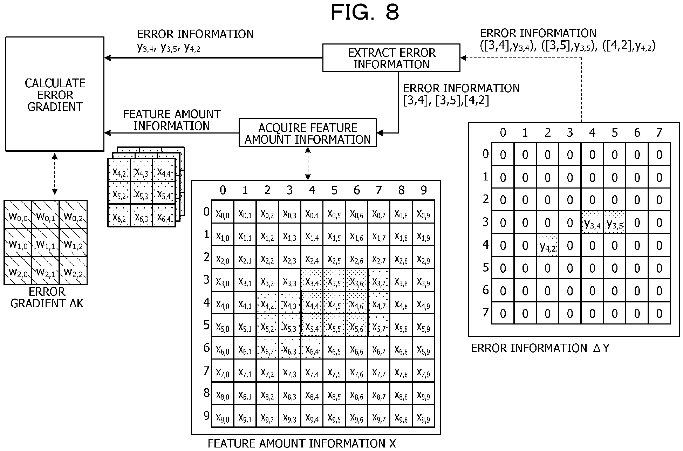

FIG. 8 is a diagram for explaining calculation of the error gradient of the convolution layer according to the first embodiment. As illustrated in FIG. 8, the second learning unit 24 extracts an element having a value larger than zero from error information $\Delta Y$ that has been backpropagated and has $7 \times 7$ size (pixels). For example, the second learning unit 24 extracts three elements "$(y_{4,2})$, $(y_{3,4})$, and $(y_{3,5})$" as the error information.

Subsequently, the second learning unit 24 acquires the feature amount information X input to the convolution layer from the recognition unit 21 at the time of the recognition processing and holds the feature amount information X and acquires feature amount information corresponding to error information extracted from the error information $\Delta Y$ from the feature amount information X.

For example, the second learning unit 24 specifies an element $(x_{4,2})$ at the same position (coordinates) as the error information $(y_{4,2})$ from feature amount information X of $9 \times 9$ size. Then, the second learning unit 24 acquires each element corresponding to a $3 \times 3$ rectangular region having the same size as the filter as feature amount information, using the element $(x_{4,2})$ as a reference. With reference to the example described above, the second learning unit 24 acquires a rectangular region "$(X4,2)$, $(x_{5,2})$, $(x_{6,2})$, $(X4,3)$, $(x_{5,3})$, $(x_{6,3})$, $(x_{4,4})$, $(x_{5,4})$, and $(x_{6,4})$" as feature amount information X1 corresponding to the error information $(y_{4,2})$.

Similarly, the second learning unit 24 acquires a rectangular region "$(x_{3,4})$, $(x_{4,4})$, $(x_{5,4})$, $(x_{3,5})$, $(x_{4,5})$, $(x_{5,5})$, $(x_{3,6})$, $(x_{4,6})$, and $(x_{5,6})$" as feature amount information X2 corresponding to the error information $(y_{3,4})$. Furthermore, the second learning unit 24 acquires a rectangular region "$(x_{3,5})$, $(x_{4,5})$, $(x_{5,5})$, $(x_{3,6})$, $(x_{4,6})$, $(x_{5,6})$, $(x_{3,7})$, $(x_{4,7})$, and $(x_{5,7})$" as feature amount information X3 corresponding to the error information $(y_{3,5})$. Note that, here, an example has been described in which the rectangular region in which the element of the feature amount information corresponding to the error information is positioned at the left corner is acquired. However, the present embodiment is not limited to this, and it is possible to acquire a rectangular region having the element at the center or a rectangular region in which the element is positioned at the right corner.

Thereafter, the second learning unit 24 calculates the error gradient of the filter using the error information extracted from the error information $\Delta Y$ and the feature amount information acquired from the feature amount information X and updates the filter. With reference to the example described above, the second learning unit 24 updates the filter using each of the error information $(y_{4,2})$ and the feature amount information X1, the error information $(y_{3,4})$ and the feature amount information X2, and the error information $(y_{3,5})$ and the feature amount information X3. Note that the method for calculating the error gradient is performed by using the formula (2) as in FIG. 5.

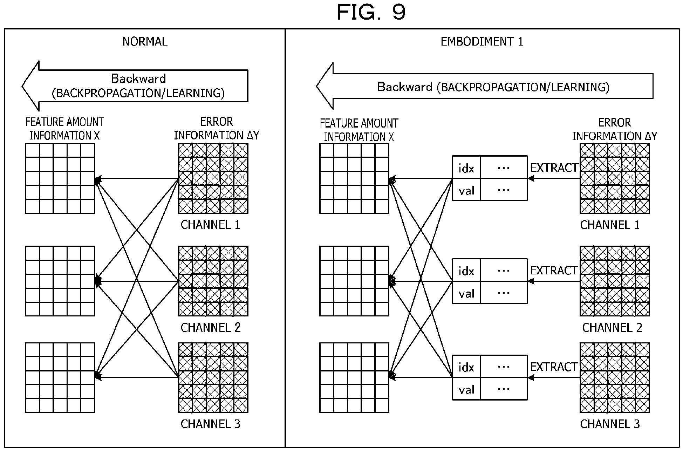

Note that the second learning unit 24 can reduce the calculation amount in comparison with a general method by executing the error gradient calculation processing described above for each channel. FIG. 9 is a diagram for explaining comparison of error extractions. As illustrated in FIG. 9, in general learning (normal) of the CNN, for each channel, all the elements of the error information $\Delta Y$ are multiplied by the feature amount information X, and addition is performed on a memory of the error gradient of the filter.

On the other hand, in the first embodiment, unlike a general method, at the time when the error information is calculated, the specific element is extracted from the error information, and an index (idx) and a value (val) of the specific element are each extracted as sparse matrixes. Specifically, for example, the second learning unit 24 acquires feature amount information of a rectangular region corresponding to the index extracted from the error information $\Delta Y$ and multiplies a value (value) corresponding to the index by the feature amount information of the rectangular region for each channel, and thereafter, performs addition to the memory of the error gradient of the filter. Taking the specific element $(y_{4,2})$ described above as an example, the index corresponds to coordinates (4,2) of the specific element $(y_{4,2})$, and the value corresponds to a value set to the coordinates (4,2) within the error information $\Delta Y$.

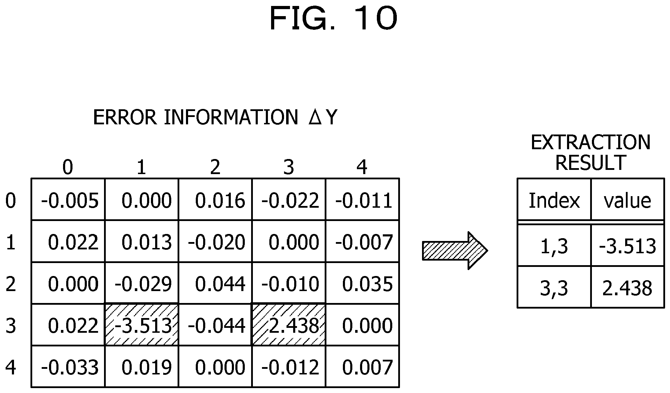

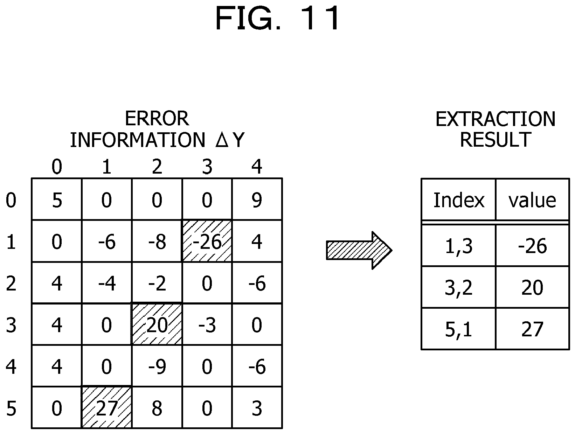

Here, as a condition of the extraction by the second learning unit 24 as a sparse matrix, various methods can be adopted. FIGs. 10 and 11 are diagrams for explaining specific examples of error extraction. As illustrated in FIG. 10, the second learning unit 24 can extract a specific element of which a value of an absolute value is equal to or more than one from among the elements of the error information $\Delta Y$. In the example in FIG. 10, the second learning unit 24 specifies a specific element $(y_{1,3})$ of which a value is "-3.513" and extracts "(1,3), -3.513" as error information "index, value". Similarly, the second learning unit 24 specifies a specific element $(y_{3,3})$ of which a value is "2.438" and extracts "(3,3), 2.438" as the error information "index, value".

Furthermore, as illustrated in FIG. 11, the second learning unit 24 can extract a specific element of which a value of an absolute value corresponds to top K values (TopK) from among the elements of the error information $\Delta Y$.

The example in FIG. 11 illustrates an example in which it is assumed that K = 3 and top three specific elements are extracted. For example, the second learning unit 24 specifies a specific element ($y_{5,1}$) of which a value is "27" and extracts "(5,1), 27" as the error information "index, value". Similarly, the second learning unit 24 specifies a specific element ($y_{1,3}$) of which a value is "-26" and extracts "(1,3), -26" as the error information "index, value". Similarly, the second learning unit 24 specifies a specific element ($y_{3,2}$) of which a value is "20" and extracts "(3,2), 20" as the error information "index, value".

[Flow of Processing]

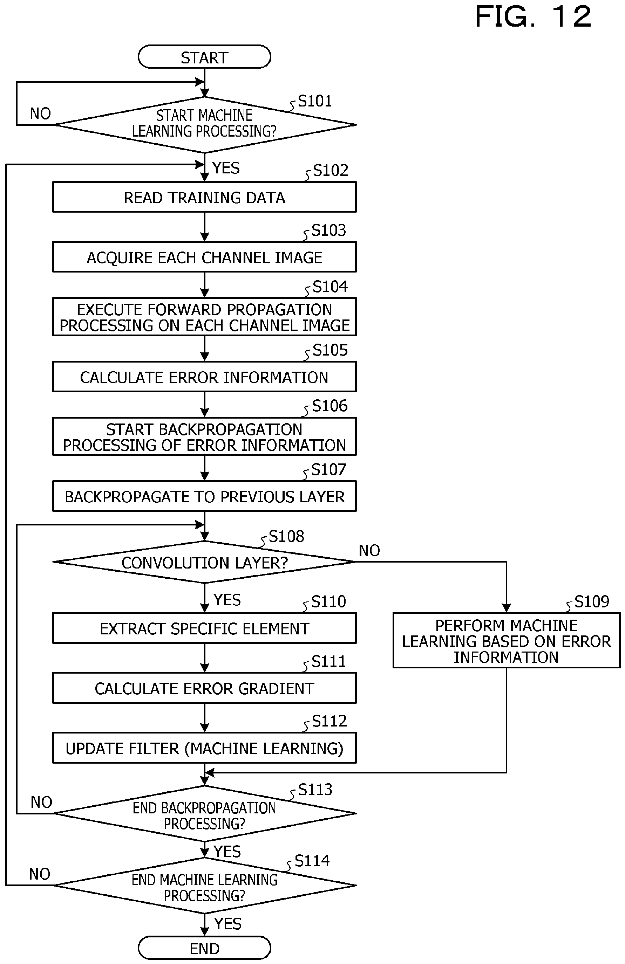

Next, a flow of the machine learning processing will be described. FIG. 12 is a flowchart illustrating the flow of the machine learning processing.

As illustrated in FIG. 12, when the machine learning processing starts (S101: Yes), the recognition unit 21 reads training data (S102), acquires each channel image from the training data (S103), and executes forward propagation processing on each channel image (S104).

Subsequently, the learning execution unit 22 calculates error information indicating an error between a recognition result and correct answer information for each channel (S105) and starts backpropagation processing of the error information (S106).

Then, the learning execution unit 22 backpropagates the error information to a previous layer (S107), and in a case where a destination of the backpropagation is a layer other than a convolution layer (S108: No), performs machine learning based on the backpropagated error information (S109).

On the other hand, in a case where the destination of the backpropagation is the convolution layer (S108: Yes), the learning execution unit 22 extracts a specific element from the error information (S110), calculates an error gradient using the specific element and the feature amount information at the time of forward propagation (S111), and updates a filter using the error gradient (S112).

Then, in a case where the backpropagation processing is continued (S113: No), the learning execution unit 22 repeats processing in S108 and subsequent steps. On the other hand, in a case where the backpropagation processing is terminated (S113: Yes), it is determined whether or not the machine learning processing is terminated (S114).

Here, in a case where the machine learning processing is continued (S114: No), the recognition unit 21 executes processing in S102 and subsequent steps. On the other hand, in a case where the machine learning processing is terminated (S114: Yes), the learning execution unit 22 stores the learned machine learning model 14, various parameters of the CNN that have been learned, or the like in the storage unit 12 as learning results.

[Effects]

As described above, the information processing apparatus 10 extracts an index and a value of a specific element that satisfies a specific condition of the error information in the error gradient calculation processing of the convolution layer used for deep learning. Then, the information processing apparatus 10 extracts feature amount information corresponding to the extracted index of the specific element and calculates an error gradient using only these values. As a result, because the information processing apparatus 10 can efficiently reduce a calculation amount, it is possible to shorten a processing time while maintaining learning accuracy.

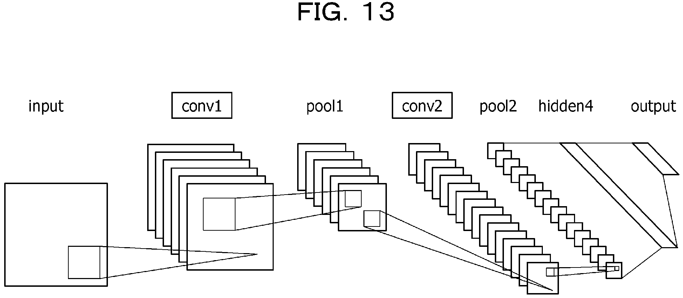

Here, a numerical value effect of the method according to the first embodiment will be described. FIG. 13 is a diagram for explaining a specific example of an application to LeNet. As illustrated in FIG. 13, a LeNet network includes an input layer (input), a convolution layer (conv1), a pooling layer (pool1), a convolution layer (conv2), a pooling layer (pool2), a hidden layer (hidden4), and an output layer (output). Here, a case is considered where the LeNet extracts K (TopK) specific elements and both of "backpropagation" and "error gradient calculation" are performed. For example, in Conv1, in a case where a channel image has a size of 24 × 24, it is possible to reduce "K/576" as a processing amount. Furthermore, in Conv2, in a case where a channel image has a size of 8 × 8, it is possible to reduce "K/64" as a processing amount.

That is, for example, a reduction rate of a calculation amount according to a channel image size is expected, and the calculation amount can be largely reduced in backpropagation of a convolution layer in which the calculation amount is significantly large.

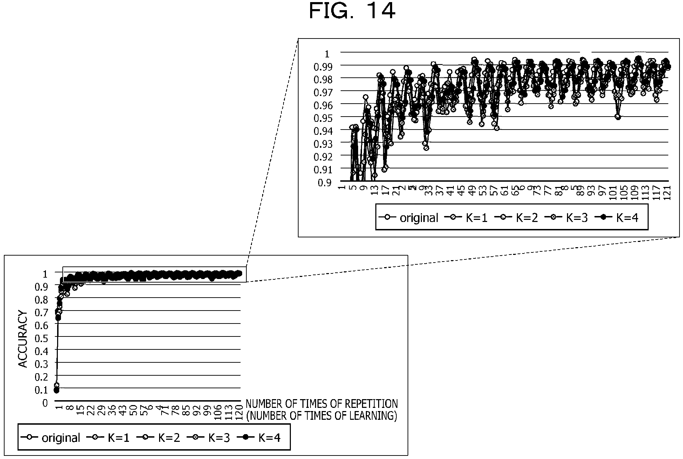

Next, it is verified how much the "K specific elements" affect accuracy of deep learning with reference to FIG. 14. FIG. 14 is a diagram for explaining accuracy at the time of learning in a case of an application to the LeNet. In FIG. 14, an effect to accuracy in a case where K is changed and filter update according to the first embodiment is performed on Mixed National Institute of Standards and Technology database (MNIST) (handwritten character recognition) will be described.

In FIG. 14, accuracy at the time when learning is performed in a state where no adjustment is made is illustrated as an original (original), and accuracy when the number of specific elements is adjusted to TopK (K = 1, 2, 3, 4) by the method according to the first embodiment is illustrated. Note that, for all the convolution layers in the LeNet, TopK (K = 1, 2, 3, 4) is extracted for each channel image in a first part of backpropagation (Backward) processing, and because layer definition of the convolution layer is changed, it is assumed that the layer definition be applied to all the convolution layers. That is, for example, accuracy of filter learning at the time when the number of specific elements is one (K = 1), two (K = 2), three (K = 3), or four (K = 4) is illustrated.

As illustrated in FIG. 14, in a case where any K is used, the accuracy is improved as in a case of the original. Moreover, in a case of K = 4, the maximum accuracy equivalent to the original can be achieved. In other words, for example, by using the method according to the first embodiment, it is possible to shorten the processing time while maintaining the learning accuracy.

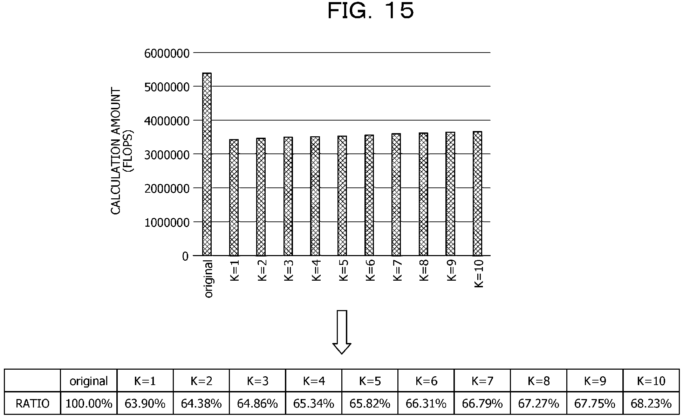

Next, a reduction amount of calculation processing in learning of the convolution layer will be described. FIG. 15 is a diagram for explaining reduction in a calculation amount in a case of an application to the LeNet. In the LetNet, a calculation amount of the convolution layer occupies 54.8% of a calculation amount of total learning. The graph in FIG. 15 illustrates a calculation amount when K of each convolution layer of the LetNet is changed. Specifically, for example, FIG. 15 illustrates a ratio of a calculation amount when K is changed from one to 10 when it is assumed that a calculation amount of the original (original) in which no adjustment is made according to the first embodiment be 100% with respect to the backpropagation of the convolution layer. That is, for example, a ratio of each calculation amount when the number of specific elements extracted from the error information is changed from one to 10 is illustrated.

As illustrated in FIG. 15, in the entire LeNet, as K increases, the calculation amount increases. However, when K = 10, a calculation amount is 68.23% of that of the original, when K = 1, a calculation amount is 63.90% of that of the original, and it is possible to sufficiently reduce the calculation amount.

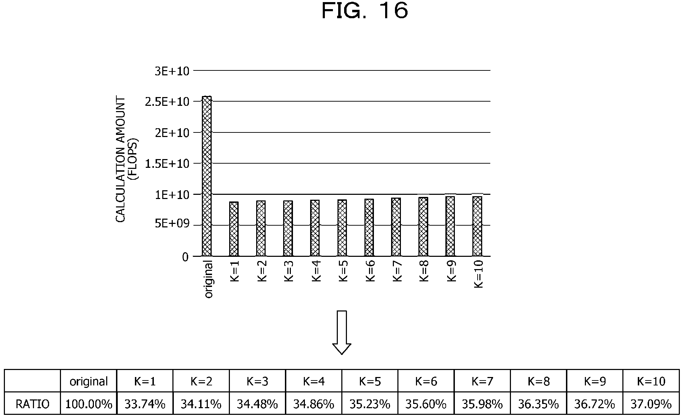

Next, an example of an application to ResNet50 will be described. FIG. 16 is a diagram for explaining reduction in a calculation amount in a case of the application to the ResNet. In the ResNet50, equal to or more than 99.5% of an operation is an operation of the convolution layer, and a reduction effect equal to or more than "K/(7×7)" can be expected even of the size of the image is the smallest. The graph in FIG. 16 illustrates a calculation amount when K of each convolution layer of the ResNet50 is changed, and the original is an entire calculation amount including an FC layer. If K = 1, the calculation amount can be reduced to 33.74% even if the FC layer is included, and calculation of forward propagation is not reduced. Therefore, the calculation amount can be reduced to 33.33% at the theoretical maximum, and reduction of 99% can be expected considering only the backpropagation.

[Second Embodiment]

While the embodiments have been described above, the embodiments may be implemented in various different modes in addition to the modes described above.

[Numerical Value Or The Like]

The numerical values, the thresholds, the number of each layer, the methods for calculating the error information and the error gradient, the method for updating the filter, a model configuration of the neural network, data sizes of, for example, the feature amount information, the error information, or the error gradient, and the like used in the embodiments described above are merely examples, and can be arbitrarily changed. Furthermore, the method described in the embodiments described above can be applied to other neural network using a convolution layer even other than the CNN. Furthermore, the value of the sparse matrix is an example of a pixel value specified on the basis of the index or the like.

[System]

Pieces of information including a processing procedure, a control procedure, a specific name, various types of data, and parameters described above or illustrated in the drawings may be optionally changed unless otherwise specified. Note that the recognition unit 21 is an example of an acquisition unit, and the learning execution unit 22 is an example of a learning execution unit.

In addition, each component of each device illustrated in the drawings is functionally conceptual and does not necessarily have to be physically configured as illustrated in the drawings. In other words, for example, specific forms of distribution and integration of each device are not limited to those illustrated in the drawings. That is, for example, all or a part of the devices may be configured by being functionally or physically distributed and integrated in optional units according to various types of loads, usage situations, or the like.

Moreover, all or any part of individual processing functions performed in each device may be implemented by a central processing unit (CPU) and a program analyzed and executed by the CPU, or may be implemented as hardware by wired logic.

[Hardware]

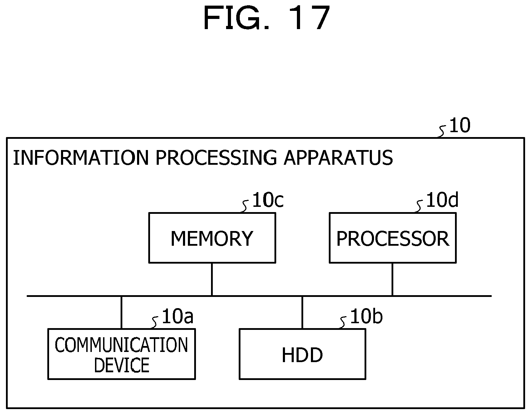

Next, a hardware configuration example of the information processing apparatus 10 will be described. FIG. 17 is a diagram for explaining a hardware configuration example. As illustrated in FIG. 17, the information processing apparatus 10 includes a communication device 10a, a hard disk drive (HDD) 10b, a memory 10c, and a processor 10d. Furthermore, each of the units illustrated in FIG. 17 is mutually connected by a bus or the like.

The communication device 10a is a network interface card or the like and communicates with another server. The HDD 10b stores a program that activates the functions illustrated in FIG. 6, and a DB.

The processor 10d reads a program that executes processing similar to the processing of each processing unit illustrated in FIG. 6 from the HDD 10b or the like, and develops the read program in the memory 10c, thereby activating a process that performs each function described with reference to FIG. 6 or the like. For example, this process executes a function similar to that of each processing unit included in the information processing apparatus 10. Specifically, for example, the processor 10d reads a program having a function similar to those of the recognition unit 21, the learning execution unit 22, or the like from the HDD 10b or the like. Then, the processor 10d executes a process for executing processing similar to those of the recognition unit 21, the learning execution unit 22, or the like.

As described above, the information processing apparatus 10 operates as an information processing apparatus that executes a learning method by reading and executing a program. Furthermore, the information processing apparatus 10 can also implement functions similar to the functions of the above-described embodiments by reading the program described above from a recording medium by a medium reading device and executing the read program described above. Note that the program referred to in other embodiments is not limited to being executed by the information processing apparatus 10. For example, the embodiments may be similarly applied to a case where another computer or server executes the program, or a case where such computer and server cooperatively execute the program.

This program may be distributed via a network such as the Internet. Furthermore, this program can be recorded on a computer-readable recording medium such as a hard disk, flexible disk (FD), CD-ROM, MagnetoOptical disk (MO), or Digital Versatile Disc (DVD), and can be executed by being read from the recording medium by a computer.

**Claims**

1. An information processing apparatus comprising:

   an acquisition unit configured to input training data to a machine learning model that includes a convolution layer and acquire an output result by the machine learning model; and
   a learning execution unit configured to extract a specific element that meets a specific condition from among elements included in error information based on an error between the training data and the output result and perform machine learning of the convolution layer using the specific element.

2. The information processing apparatus according to claim 1, wherein the learning execution unit includes extracting an element of which a value is equal to or more than a threshold or a predetermined number of elements of which a value is large from among the elements included in the error information as the specific elements.

3. The information processing apparatus according to claim 1, wherein the machine learning model includes the convolution layer and a plurality of layers, and
   the wherein the learning execution unit includes:

   acquiring the output result by forward propagating the training data from an input layer to an output layer of the machine learning model,
   backpropagating the error information from the output layer to the input layer,
   performing machine learning based on the error information backpropagated to a layer other than the convolution layer,
   extracting the specific element from the error information backpropagated to the convolution layer regarding the convolution layer, and
   performing machine learning using the specific element.

4. The information processing apparatus according to claim 3, wherein the wherein the learning execution unit includes:

   acquiring, at the time of the forward propagation, feature amount information regarding a feature amount input to the convolution layer, and

performing, at the time of the backpropagation, machine learning of the convolution layer by using the feature amount information and the specific element.

5. The information processing apparatus according to claim 4, wherein the convolution layer generates a feature amount from data propagated by the forward propagation through filtering using a filter, and the wherein the learning execution unit includes:

calculating an error gradient of the filter using the feature amount information and the specific element and updating the filter on the basis of the error gradient as machine learning of the convolution layer.

6. The information processing apparatus according to claim 5, wherein the learning execution unit includes:

acquiring the output result that is a result of determining the image data by the machine learning model according to an input of the training data that is image data,
calculating an error gradient of the filter by using the feature amount information that has a predetermined image size and is generated from the image data at the time of the forward propagation, and the error information, updating the filter by a convolution operation based on the error gradient.

7. The information processing apparatus according to claim 6, wherein the learning execution unit includes:

extracting a sparse matrix that includes an index and a value of the specific element from the error information, acquiring a rectangular region corresponding to the index from the feature amount information, and updating the filter by the convolution operation that scalar-multiplies the value of the sparse matrix by each piece of the feature amount information in the rectangular region and performs addition.

8. An information processing method executed by a computer, the method comprising:

inputting training data to a machine learning model that includes a convolution layer and acquire an output result by the machine learning model;
extracting a specific element that meets a specific condition from among elements included in error information based on an error between the training data and the output result; and
performing machine learning of the convolution layer using the specific element.

9. An information processing program that causes a computer to execute a process, the process comprising:

inputting training data to a machine learning model that includes a convolution layer and acquire an output result by the machine learning model;
extracting a specific element that meets a specific condition from among elements included in error information based on an error between the training data and the output result; and
performing machine learning of the convolution layer using the specific element.

# FIG. 1

FORWARD PROPAGATION (RECOGNITION PROCESSING): CATEGORIZE IMAGE

INPUT LAYER (Input) | CONVOLUTION LAYER (Conv 1) | ACTIVATION FUNCTION LAYER (ReLU1) | POOLING LAYER (Pool 1) | CONVOLUTION LAYER (Conv 2) | ACTIVATION FUNCTION LAYER (ReLU2) | POOLING LAYER (Pool 2) | FULLY-CONNECTED LAYER (Fully-connl) | SOFTMAX LAYER (Softmax) | OUTPUT LAYER (Output)

BACKPROPAGATION (LEARNING PROCESSING): UPDATE PARAMETER OF NEURAL NETWORK

# FIG. 2

(INPUT) FEATURE AMOUNT INFORMATION X          (OUTPUT) FEATURE AMOUNT INFORMATION Y

FILTER

INPUT

LABEL

ReLu LAYER

CONVOLUTION
LAYER

CALCULATION OF
ReLu LAYER

OUTPUT

INPUT

FIG. 3

FEATURE AMOUNT INFORMATION X

FILTER K

FEATURE AMOUNT INFORMATION Y

convolution

FORMULA (1)

# FIG. 4

FIG. 5

FEATURE AMOUNT INFORMATION X

| | | | | | | | | | |
|---|---|---|---|---|---|---|---|---|---|
| $x_{0,0}$ | $x_{0,1}$ | $x_{0,2}$ | $x_{0,3}$ | $x_{0,4}$ | $x_{0,5}$ | $x_{0,6}$ | $x_{0,7}$ | $x_{0,8}$ | $x_{0,9}$ |
| $x_{1,0}$ | $x_{1,1}$ | $x_{1,2}$ | $x_{1,3}$ | $x_{1,4}$ | $x_{1,5}$ | $x_{1,6}$ | $x_{1,7}$ | $x_{1,8}$ | $x_{1,9}$ |
| $x_{2,0}$ | $x_{2,1}$ | $x_{2,2}$ | $x_{2,3}$ | $x_{2,4}$ | $x_{2,5}$ | $x_{2,6}$ | $x_{2,7}$ | $x_{2,8}$ | $x_{2,9}$ |
| $x_{3,0}$ | $x_{3,1}$ | $x_{3,2}$ | $x_{3,3}$ | $x_{3,4}$ | $x_{3,5}$ | $x_{3,6}$ | $x_{3,7}$ | $x_{3,8}$ | $x_{3,9}$ |
| $x_{4,0}$ | $x_{4,1}$ | $x_{4,2}$ | $x_{4,3}$ | $x_{4,4}$ | $x_{4,5}$ | $x_{4,6}$ | $x_{4,7}$ | $x_{4,8}$ | $x_{4,9}$ |
| $x_{5,0}$ | $x_{5,1}$ | $x_{5,2}$ | $x_{5,3}$ | $x_{5,4}$ | $x_{5,5}$ | $x_{5,6}$ | $x_{5,7}$ | $x_{5,8}$ | $x_{5,9}$ |
| $x_{6,0}$ | $x_{6,1}$ | $x_{6,2}$ | $x_{6,3}$ | $x_{6,4}$ | $x_{6,5}$ | $x_{6,6}$ | $x_{6,7}$ | $x_{6,8}$ | $x_{6,9}$ |
| $x_{7,0}$ | $x_{7,1}$ | $x_{7,2}$ | $x_{7,3}$ | $x_{7,4}$ | $x_{7,5}$ | $x_{7,6}$ | $x_{7,7}$ | $x_{7,8}$ | $x_{7,9}$ |
| $x_{8,0}$ | $x_{8,1}$ | $x_{8,2}$ | $x_{8,3}$ | $x_{8,4}$ | $x_{8,5}$ | $x_{8,6}$ | $x_{8,7}$ | $x_{8,8}$ | $x_{8,9}$ |
| $x_{9,0}$ | $x_{9,1}$ | $x_{9,2}$ | $x_{9,3}$ | $x_{9,4}$ | $x_{9,5}$ | $x_{9,6}$ | $x_{9,7}$ | $x_{9,8}$ | $x_{9,9}$ |

ERROR GRADIENT ΔK

| | | |
|---|---|---|
| $w_{0,0}$ | $w_{0,1}$ | $w_{0,2}$ |
| $w_{1,0}$ | $w_{1,1}$ | $w_{1,2}$ |
| $w_{2,0}$ | $w_{2,1}$ | $w_{2,2}$ |

convolution

FORMULA (2)

ERROR INFORMATION (ACTIVATION ERROR) ΔY

| | | | | | | | |
|---|---|---|---|---|---|---|---|
| $y_{0,0}$ | $y_{0,1}$ | $y_{0,2}$ | $y_{0,3}$ | $y_{0,4}$ | $y_{0,5}$ | $y_{0,6}$ | $y_{0,7}$ |
| $y_{1,0}$ | $y_{1,1}$ | $y_{1,2}$ | $y_{1,3}$ | $y_{1,4}$ | $y_{1,5}$ | $y_{1,6}$ | $y_{1,7}$ |
| $y_{2,0}$ | $y_{2,1}$ | $y_{2,2}$ | $y_{2,3}$ | $y_{2,4}$ | $y_{2,5}$ | $y_{2,6}$ | $y_{2,7}$ |
| $y_{3,0}$ | $y_{3,1}$ | $y_{3,2}$ | $y_{3,3}$ | $y_{3,4}$ | $y_{3,5}$ | $y_{3,6}$ | $y_{3,7}$ |
| $y_{4,0}$ | $y_{4,1}$ | $y_{4,2}$ | $y_{4,3}$ | $y_{4,4}$ | $y_{4,5}$ | $y_{4,6}$ | $y_{4,7}$ |
| $y_{5,0}$ | $y_{5,1}$ | $y_{5,2}$ | $y_{5,3}$ | $y_{5,4}$ | $y_{5,5}$ | $y_{5,6}$ | $y_{5,7}$ |
| $y_{6,0}$ | $y_{6,1}$ | $y_{6,2}$ | $y_{6,3}$ | $y_{6,4}$ | $y_{6,5}$ | $y_{6,6}$ | $y_{6,7}$ |
| $y_{7,0}$ | $y_{7,1}$ | $y_{7,2}$ | $y_{7,3}$ | $y_{7,4}$ | $y_{7,5}$ | $y_{7,6}$ | $y_{7,7}$ |

# FIG. 6

FEATURE AMOUNT INFORMATION X

| | | | | | | | | | |
|---|---|---|---|---|---|---|---|---|---|
| $x_{0,0}$ | $x_{0,1}$ | $x_{0,2}$ | $x_{0,3}$ | $x_{0,4}$ | $x_{0,5}$ | $x_{0,6}$ | $x_{0,7}$ | $x_{0,8}$ | $x_{0,9}$ |
| $x_{1,0}$ | $x_{1,1}$ | $x_{1,2}$ | $x_{1,3}$ | $x_{1,4}$ | $x_{1,5}$ | $x_{1,6}$ | $x_{1,7}$ | $x_{1,8}$ | $x_{1,9}$ |
| $x_{2,0}$ | $x_{2,1}$ | $x_{2,2}$ | $x_{2,3}$ | $x_{2,4}$ | $x_{2,5}$ | $x_{2,6}$ | $x_{2,7}$ | $x_{2,8}$ | $x_{2,9}$ |
| $x_{3,0}$ | $x_{3,1}$ | $x_{3,2}$ | $x_{3,3}$ | $x_{3,4}$ | $x_{3,5}$ | $x_{3,6}$ | $x_{3,7}$ | $x_{3,8}$ | $x_{3,9}$ |
| $x_{4,0}$ | $x_{4,1}$ | $x_{4,2}$ | $x_{4,3}$ | $x_{4,4}$ | $x_{4,5}$ | $x_{4,6}$ | $x_{4,7}$ | $x_{4,8}$ | $x_{4,9}$ |
| $x_{5,0}$ | $x_{5,1}$ | $x_{5,2}$ | $x_{5,3}$ | $x_{5,4}$ | $x_{5,5}$ | $x_{5,6}$ | $x_{5,7}$ | $x_{5,8}$ | $x_{5,9}$ |
| $x_{6,0}$ | $x_{6,1}$ | $x_{6,2}$ | $x_{6,3}$ | $x_{6,4}$ | $x_{6,5}$ | $x_{6,6}$ | $x_{6,7}$ | $x_{6,8}$ | $x_{6,9}$ |
| $x_{7,0}$ | $x_{7,1}$ | $x_{7,2}$ | $x_{7,3}$ | $x_{7,4}$ | $x_{7,5}$ | $x_{7,6}$ | $x_{7,7}$ | $x_{7,8}$ | $x_{7,9}$ |
| $x_{8,0}$ | $x_{8,1}$ | $x_{8,2}$ | $x_{8,3}$ | $x_{8,4}$ | $x_{8,5}$ | $x_{8,6}$ | $x_{8,7}$ | $x_{8,8}$ | $x_{8,9}$ |
| $x_{9,0}$ | $x_{9,1}$ | $x_{9,2}$ | $x_{9,3}$ | $x_{9,4}$ | $x_{9,5}$ | $x_{9,6}$ | $x_{9,7}$ | $x_{9,8}$ | $x_{9,9}$ |

ERROR GRADIENT ΔK

| | | |
|---|---|---|
| $w_{0,0}$ | $w_{0,1}$ | $w_{0,2}$ |
| $w_{1,0}$ | $w_{1,1}$ | $w_{1,2}$ |
| $w_{2,0}$ | $w_{2,1}$ | $w_{2,2}$ |

convolution

$$w_{u,v} = \sum_{0 \leq i,j \leq n} y_{i,j}\, x_{i+u,j+v}$$

ERROR INFORMATION (ACTIVATION ERROR) ΔY

| | | | | | | | |
|---|---|---|---|---|---|---|---|
| 0 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |
| 0 | 0 | 0 | 0 | $y_{3,4}$ | $y_{3,5}$ | 0 | 0 |
| 0 | 0 | $y_{4,2}$ | 0 | 0 | 0 | 0 | 0 |
| 0 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |

WASTEFUL CALCULATION EXAMPLE

ERROR GRADIENT ΔK

| | | |
|---|---|---|
| $w_{0,0}$ | $w_{0,1}$ | $w_{0,2}$ |
| $w_{1,0}$ | $w_{1,1}$ | $w_{1,2}$ |
| $w_{2,0}$ | $w_{2,1}$ | $w_{2,2}$ |

+=

FEATURE AMOUNT INFORMATION

| | | |
|---|---|---|
| $x_{1,1}$ | $x_{1,2}$ | $x_{1,3}$ |
| $x_{2,1}$ | $x_{2,2}$ | $x_{2,3}$ |
| $x_{3,1}$ | $x_{3,2}$ | $x_{3,3}$ |

ERROR INFORMATION

×0

# FIG. 7

INFORMATION PROCESSING APPARATUS — 10

COMMUNICATION UNIT — 11

CONTROL UNIT — 20

RECOGNITION UNIT — 21

LEARNING EXECUTION UNIT — 22

FIRST LEARNING UNIT — 23

SECOND LEARNING UNIT — 24

STORAGE UNIT — 12

TRAINING DATA GROUP — 13

MACHINE LEARNING MODEL — 14

INTERMEDIATE DATA — 15

# FIG. 8

ERROR INFORMATION
$y_{3,4}$, $y_{3,5}$, $y_{4,2}$

ERROR INFORMATION
$([3,4],y_{3,4})$, $([3,5],y_{3,5})$, $([4,2],y_{4,2})$

CALCULATE ERROR GRADIENT

EXTRACT ERROR INFORMATION

ERROR INFORMATION
$[3,4]$, $[3,5]$, $[4,2]$

FEATURE AMOUNT INFORMATION

ACQUIRE FEATURE AMOUNT INFORMATION

| | | |
|---|---|---|
| $w_{0,0}$ | $w_{0,1}$ | $w_{0,2}$ |
| $w_{1,0}$ | $w_{1,1}$ | $w_{1,2}$ |
| $w_{2,0}$ | $w_{2,1}$ | $w_{2,2}$ |

ERROR GRADIENT ΔK

| | | |
|---|---|---|
| $x_{4,2}$ | $x_{4,3}$ | $x_{4,4}$ |
| $x_{5,2}$ | $x_{5,3}$ | $x_{5,4}$ |
| $x_{6,2}$ | $x_{6,3}$ | $x_{6,4}$ |

| | 0 | 1 | 2 | 3 | 4 | 5 | 6 | 7 | 8 | 9 |
|---|---|---|---|---|---|---|---|---|---|---|
| 0 | $x_{0,0}$ | $x_{0,1}$ | $x_{0,2}$ | $x_{0,3}$ | $x_{0,4}$ | $x_{0,5}$ | $x_{0,6}$ | $x_{0,7}$ | $x_{0,8}$ | $x_{0,9}$ |
| 1 | $x_{1,0}$ | $x_{1,1}$ | $x_{1,2}$ | $x_{1,3}$ | $x_{1,4}$ | $x_{1,5}$ | $x_{1,6}$ | $x_{1,7}$ | $x_{1,8}$ | $x_{1,9}$ |
| 2 | $x_{2,0}$ | $x_{2,1}$ | $x_{2,2}$ | $x_{2,3}$ | $x_{2,4}$ | $x_{2,5}$ | $x_{2,6}$ | $x_{2,7}$ | $x_{2,8}$ | $x_{2,9}$ |
| 3 | $x_{3,0}$ | $x_{3,1}$ | $x_{3,2}$ | $x_{3,3}$ | $x_{3,4}$ | $x_{3,5}$ | $x_{3,6}$ | $x_{3,7}$ | $x_{3,8}$ | $x_{3,9}$ |
| 4 | $x_{4,0}$ | $x_{4,1}$ | $x_{4,2}$ | $x_{4,3}$ | $x_{4,4}$ | $x_{4,5}$ | $x_{4,6}$ | $x_{4,7}$ | $x_{4,8}$ | $x_{4,9}$ |
| 5 | $x_{5,0}$ | $x_{5,1}$ | $x_{5,2}$ | $x_{5,3}$ | $x_{5,4}$ | $x_{5,5}$ | $x_{5,6}$ | $x_{5,7}$ | $x_{5,8}$ | $x_{5,9}$ |
| 6 | $x_{6,0}$ | $x_{6,1}$ | $x_{6,2}$ | $x_{6,3}$ | $x_{6,4}$ | $x_{6,5}$ | $x_{6,6}$ | $x_{6,7}$ | $x_{6,8}$ | $x_{6,9}$ |
| 7 | $x_{7,0}$ | $x_{7,1}$ | $x_{7,2}$ | $x_{7,3}$ | $x_{7,4}$ | $x_{7,5}$ | $x_{7,6}$ | $x_{7,7}$ | $x_{7,8}$ | $x_{7,9}$ |
| 8 | $x_{8,0}$ | $x_{8,1}$ | $x_{8,2}$ | $x_{8,3}$ | $x_{8,4}$ | $x_{8,5}$ | $x_{8,6}$ | $x_{8,7}$ | $x_{8,8}$ | $x_{8,9}$ |
| 9 | $x_{9,0}$ | $x_{9,1}$ | $x_{9,2}$ | $x_{9,3}$ | $x_{9,4}$ | $x_{9,5}$ | $x_{9,6}$ | $x_{9,7}$ | $x_{9,8}$ | $x_{9,9}$ |

FEATURE AMOUNT INFORMATION X

| | 0 | 1 | 2 | 3 | 4 | 5 | 6 | 7 |
|---|---|---|---|---|---|---|---|---|
| 0 | 0 | 0 | 0 | 0 | 0 | 0 | 0 | 0 |
| 1 | 0 | 0 | 0 | 0 | 0 | 0 | 0 | 0 |
| 2 | 0 | 0 | 0 | 0 | 0 | 0 | 0 | 0 |
| 3 | 0 | 0 | 0 | 0 | $y_{3,4}$ | $y_{3,5}$ | 0 | 0 |
| 4 | 0 | 0 | $y_{4,2}$ | 0 | 0 | 0 | 0 | 0 |
| 5 | 0 | 0 | 0 | 0 | 0 | 0 | 0 | 0 |
| 6 | 0 | 0 | 0 | 0 | 0 | 0 | 0 | 0 |
| 7 | 0 | 0 | 0 | 0 | 0 | 0 | 0 | 0 |

ERROR INFORMATION ΔY

## FIG. 9

NORMAL

Backward
(BACKPROPAGATION/LEARNING)

FEATURE AMOUNT
INFORMATION X

ERROR
INFORMATION ΔY

CHANNEL 1

CHANNEL 2

CHANNEL 3

EMBODIMENT 1

Backward (BACKPROPAGATION/LEARNING)

FEATURE AMOUNT
INFORMATION X

ERROR
INFORMATION ΔY

idx | ⋯
val | ⋯

EXTRACT

CHANNEL 1

idx | ⋯
val | ⋯

EXTRACT

CHANNEL 2

idx | ⋯
val | ⋯

EXTRACT

CHANNEL 3

# FIG. 10

ERROR INFORMATION $\Delta Y$

|   | 0 | 1 | 2 | 3 | 4 |
|---|---|---|---|---|---|
| 0 | -0.005 | 0.000 | 0.016 | -0.022 | -0.011 |
| 1 | 0.022 | 0.013 | -0.020 | 0.000 | -0.007 |
| 2 | 0.000 | -0.029 | 0.044 | -0.010 | 0.035 |
| 3 | 0.022 | -3.513 | -0.044 | 2.438 | 0.000 |
| 4 | -0.033 | 0.019 | 0.000 | -0.012 | 0.007 |

EXTRACTION RESULT

| Index | value |
|---|---|
| 1,3 | -3.513 |
| 3,3 | 2.438 |

# FIG. 11

ERROR
INFORMATION ΔY

|   | 0 | 1 | 2 | 3 | 4 |
|---|---|---|---|---|---|
| 0 | 5 | 0 | 0 | 0 | 9 |
| 1 | 0 | -6 | -8 | -26 | 4 |
| 2 | 4 | -4 | -2 | 0 | -6 |
| 3 | 4 | 0 | 20 | -3 | 0 |
| 4 | 4 | 0 | -9 | 0 | -6 |
| 5 | 0 | 27 | 8 | 0 | 3 |

EXTRACTION
RESULT

| Index | value |
|-------|-------|
| 1,3 | -26 |
| 3,2 | 20 |
| 5,1 | 27 |

# FIG. 12

```
                    ┌─────────────┐
                    │    START    │
                    └──────┬──────┘
                           │
         ┌─────────────────▼──────────────────┐        S101
    NO   ◇        START MACHINE               ◇
  ◄──────┤       LEARNING PROCESSING?          │
         └──────────────────┬─────────────────┘
                            │ YES              S102
              ┌─────────────▼──────────────┐
              │     READ TRAINING DATA     │
              └─────────────┬──────────────┘
                            │                 S103
              ┌─────────────▼──────────────┐
              │   ACQUIRE EACH CHANNEL IMAGE │
              └─────────────┬──────────────┘
                            │                 S104
              ┌─────────────▼──────────────┐
              │  EXECUTE FORWARD PROPAGATION │
              │ PROCESSING ON EACH CHANNEL IMAGE │
              └─────────────┬──────────────┘
                            │                 S105
              ┌─────────────▼──────────────┐
              │   CALCULATE ERROR INFORMATION │
              └─────────────┬──────────────┘
                            │                 S106
              ┌─────────────▼──────────────┐
              │   START BACKPROPAGATION     │
              │ PROCESSING OF ERROR INFORMATION │
              └─────────────┬──────────────┘
                            │                 S107
              ┌─────────────▼──────────────┐
              │  BACKPROPAGATE TO PREVIOUS LAYER │
              └─────────────┬──────────────┘
                            │                 S108
         ┌──────────────────▼─────────────────┐     NO
         ◇        CONVOLUTION LAYER?           ◇──────────┐
         └──────────────────┬─────────────────┘          │
                            │ YES       S110              │   S109
              ┌─────────────▼──────────────┐   ┌──────────▼──────────┐
              │   EXTRACT SPECIFIC ELEMENT  │   │ PERFORM MACHINE      │
              └─────────────┬──────────────┘   │ LEARNING BASED ON ERROR│
                            │         S111      │    INFORMATION       │
              ┌─────────────▼──────────────┐   └──────────┬──────────┘
              │   CALCULATE ERROR GRADIENT  │              │
              └─────────────┬──────────────┘              │
                            │         S112                 │
              ┌─────────────▼──────────────┐              │
              │  UPDATE FILTER (MACHINE LEARNING) │        │
              └─────────────┬──────────────┘              │
                            │◄───────────────────────────┘
                            │                 S113
         ┌──────────────────▼─────────────────┐
    NO   ◇       END BACKPROPAGATION          ◇
  ◄──────┤           PROCESSING?               │
         └──────────────────┬─────────────────┘
                            │ YES              S114
         ┌──────────────────▼─────────────────┐
    NO   ◇      END MACHINE LEARNING          ◇
  ◄──────┤           PROCESSING?               │
         └──────────────────┬─────────────────┘
                            │ YES
                    ┌───────▼─────┐
                    │     END     │
                    └─────────────┘
```

FIG. 13

input    conv1    pool1    conv2    pool2    hidden4    output

FIG. 14

FIG. 15

| | original | K=1 | K=2 | K=3 | K=4 | K=5 | K=6 | K=7 | K=8 | K=9 | K=10 |
|---|---|---|---|---|---|---|---|---|---|---|---|
| RATIO | 100.00% | 63.90% | 64.38% | 64.86% | 65.34% | 65.82% | 66.31% | 66.79% | 67.27% | 67.75% | 68.23% |

FIG. 16

| | original | K=1 | K=2 | K=3 | K=4 | K=5 | K=6 | K=7 | K=8 | K=9 | K=10 |
|---|---|---|---|---|---|---|---|---|---|---|---|
| RATIO | 100.00% | 33.74% | 34.11% | 34.48% | 34.86% | 35.23% | 35.60% | 35.98% | 36.35% | 36.72% | 37.09% |

# FIG. 17

INFORMATION PROCESSING APPARATUS 10

MEMORY 10c

PROCESSOR 10d

COMMUNICATION DEVICE 10a

HDD 10b

Europäisches
Patentamt

European
Patent Office

Office européen
des brevets

# EUROPEAN SEARCH REPORT

**Application Number**

EP 21 16 7810

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/097841 A1 (PETOUSIS IOANNIS [US] ET AL) 26 March 2020 (2020-03-26) * figures 1-3 * * paragraphs [0006] - [0023] * * paragraphs [0029] - [0085] * ----- | 1-9 | INV. G06N3/04 G06N3/08 |
| A | US 2019/378014 A1 (YAMAMOTO KOHEI [JP] ET AL) 12 December 2019 (2019-12-12) * figures 1-3,10,11 * * paragraphs [0036] - [0048] * * paragraphs [0068] - [0073] * ----- | 1-9 | |

**TECHNICAL FIELDS SEARCHED (IPC)**

G06N

The present search report has been drawn up for all claims

| Place of search | Date of completion of the search | Examiner |
|---|---|---|
| The Hague | 21 October 2021 | Piriou, Nominoë |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 3 940 601 A1

## ANNEX TO THE EUROPEAN SEARCH REPORT
## ON EUROPEAN PATENT APPLICATION NO.

EP 21 16 7810

This annex lists the patent family members relating to the patent documents cited in the above-mentioned European search report.
The members are as contained in the European Patent Office EDP file on
The European Patent Office is in no way liable for these particulars which are merely given for the purpose of information.

21-10-2021

| Patent document cited in search report | Publication date | Patent family member(s) | Publication date |
|---|---|---|---|
| US 2020097841 A1 | 26-03-2020 | NONE | |
| US 2019378014 A1 | 12-12-2019 | JP 2019212206 A<br>US 2019378014 A1 | 12-12-2019<br>12-12-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019212206 A
- JP 2019113914 A